## Europäisches Patentamt

## European Patent Office

## Office européen des brevets

(19)

(11) Publication number: **0 064 035**
**A1**

# EUROPEAN PATENT APPLICATION

(12)

(21) Application number: **82830077.2**

(22) Date of filing: **31.03.82**

(51) Int. Cl.³: **G 09 F 21/04,** B 60 R 13/00,
B 60 Q 1/50

(30) Priority: **27.04.81 IT 3576881 U**

(43) Date of publication of application: **03.11.82**
**Bulletin 82/44**

(84) Designated Contracting States: **AT BE CH DE FR GB LI
LU NL SE**

(71) Applicant: **Autofioretti s.r.l., Corso Francia, 25I, Roma
(IT)**

(72) Inventor: **Morosillo, Silvano, 22, Via Benedetta,
00153 Rome (IT)**

(74) Representative: **Massari, Marcello, Studio M. Massari 23,
Via della Fontanella Borghese, I-00186 Roma (IT)**

(54) **Luminous sign for trucks.**

(57) The model of utility referred to in this description and which we call «luminacab», consists of a metallic frame (b) made of sheet which can be either zinc and plastic coated or painted with epoxidic powder, which is used to hold up a shaped panel of transparent perspex (a), in order to bring out a luminescent advertising notice. The frame is mounted with special supports (c) on the truck's cab.

The perspex (a) panel and the frame (b) are screwed on a support of plastic or fibre-glass (c), which is fitted on the coachwork sheet of the cab's roof either by screws or by a metallic «L» shaped attachment at the raingutter of the cab itself.

## LUMINOUS SIGN FOR TRUCKS

The model of utility referred to in this description and which we call "luminacab" consists of a metallic frame made of sheet which can be either zinc and plastic coated or painted with epoxidic powder, which is used to hold up a shaped panel of transparent perspex, in order to bring out a luminescent advertising notice. The frame is mounted with special supports on the truck's cab.

The perspex panel and the frame are screwed on a support of plastic or fibre-glass, which is fitted on the coachwork sheet of the cab's roof either by screws or by a metallic "L" shaped attachment at the raingutter of the cab itself.

The panel with the advertising notice is of luminescent type in order to make clear the pictures and the signs from a relatively good distance, since inside the fibre-glass support there is a light source constituted by a number of luminescent electric light bulbs.

The "luminacab" system is produced in different models, and can be mounted on most current truck models which can be found in Italy and abroad.

The "luminacab" system is well illuminated and therefore is very effective in the dark, emphasizing the the notices reproduced on the perspex surface.

The picture 1 of the table 1 shows the ensemble "luminacab" which consists of: luminous panel (a), the frame (b) and the support of fibre-glass (c). The picture 2 of the table 1 shows the "luminacab" section with the fibre-glass support on whose inside may be seen the set of luminescent electric light bulbs. The picture 3 of the table 1 points out the transversal section of the perspex panel (a) with the metallic frame (b).

The luminescent electric light bulbs (d) which work by the available voltage of the motor vehicle are mounted on suitable bulb sockets with connection either Edison system or of bayonet cap. Each bulb socket is fixed at the base by a steel rivet on an aluminium hoop (g) screwed on the fibre-glass box (c). The aluminium hoop brings the negative pole of the electric current while a second conductor of protected copper (h) brings the positive polarity. The electric connection with the truck is assured by a bipolar relay.

The metallic frame (b) is made of a pressed steel sheet, either zinc and plastic coated or painted with epoxidic powder, it consists of two semicircles and two straight axles welded together.

The "luminacab" can be produced with white supports or, on request,in any colour.

The "luminacab" is very suitable for the advertising
of commercial and industrial products, and for slogans
for any kind of firm. It offers an advertising at low
price which is brought into the cities of different
countries by the trucks, spreading the message by day
and by night.

In order to point out more the original innovations
which we introduced for the luminous truck's signs,
we say that in similar products on the market nowadays:

1) the lighting installation is constituted of bulb
sockets fixed directly on the fibre-glass and supplied
by two wires which link them;

2) the perspex is fixed on the fibre-glass side by a
circular section rubber washer which has three grooves,
the lower one to hold the perspex, the upper one which
must be fitted in the fibre-glass, and the central one
where runs a string for the expansion locking. Considering the extent and the flexibility of this kind of
plate, the assembling is extremely difficult and besides it requires the work of two persons and also
the dismounting of the truck's sign.

0064035

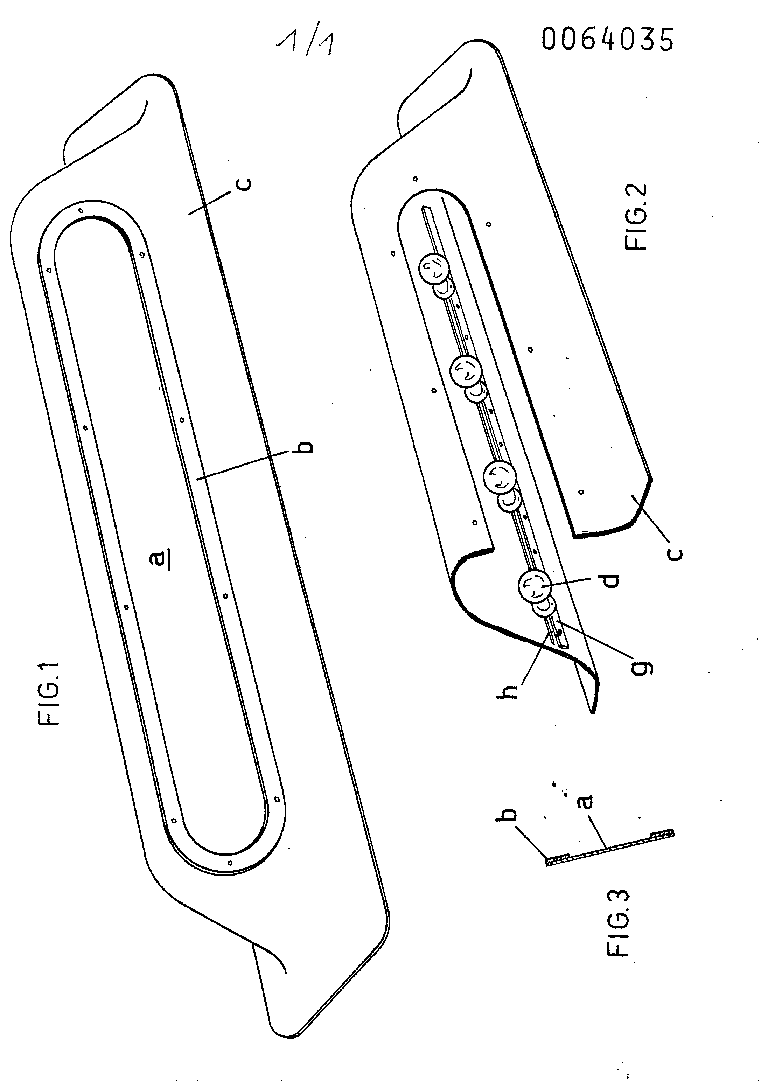

CLAIMS

1) Model "luminacab" made up of a transparent luminous perspex panel, for the advertising on the trucks.

2) Claim referring to the previous number, characterized by the fact that the luminescent panel (a) is fixed by a metallic frame (b) on the support (c) with screws.

3) Claim referring to the previous number, characterized by the fact that the ensemble "luminacab" is fixed on the cab's roof of the trucks either with screws or by a metallic structure screwed on the raingutter of the motor vehicle itself.

4) Claim referring to the previous number, characterized by the fact that the panel (b) is illuminated on the inside of the support (c) by a set of electric light bulbs with either bayonet or screw connection, which bring out the notices of (b).

5) Claim referring to the previous number, characterized by the possibility to install or replace the bulbs (d) in the case that they burn out, by simply unscrewing the fixing frame and removing the perspex panel (a).

6) Claim referring to the previous number, characterized by the elimination of the difficulty noticed in the similar products now on the market, which do not allow the removal and replacement of the rubber
washer easily.

7) Claim referring to the previous number, characterized by the elimination of the necessity to open
completely the lower side of the model (c).

8) Claim referring to the previous number, characterized by the possibility that the model (c) can be
completely boxed, closed also on the lower side, in
order to reduce at the minimum the water and dust infiltrations which damage the electric installation.

9) Claim referring to the previous number, characterized by the fact that the "luminacab" offers the opportunity to get an advertising at low price, when it
is installed on a cab's truck which drives into the
cities and from city to city, bringing the message
continuosly among the people.

10) Claim referring to the previous number, characterized by the fact that the "luminacab" has been described and represented in our favourite way but every
other solution produced by others and based on the
same principles and with the same purpose or with similar shapes, must be considered covered by this model.

FIG.1

a

b

c

FIG.3

b

a

FIG.2

h

g

d

c

0064035

1/1

0064035

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | BE-A- 531 649 (FIAT) *The whole document* | 1,2,4-10 | G 09 F 21/04 B 60 R 13/00 B 60 Q 1/50 |
| X | US-A-3 916 378 (KENNEDY) *The whole document* | 1,3 | |
| X | US-A-3.935 654 (RUBIN) *The whole document* | 1,2,4 | |
| X | FR-A-1 018 335 (GENEVRIER) *The whole document* | 1,2,4 | |
| X | FR-A-2 347 232 (AB FORENADE AREBOLAGEN) *The whole document* | 1,3 | |

TECHNICAL FIELDS SEARCHED (Int. Cl. ³)

G 09 F 21/04
B 60 R 13/00
B 60 Q 1/50
B 60 Q 1/46

The present search report has been drawn up for all claims

| Place of search | Date of completion of the search | Examiner |
|---|---|---|
| THE HAGUE | 26-07-1982 | ONILLON C.G.A. |